# FASCICULE DE BREVET EUROPEEN

(11) **EP 1 843 229 B1**
(45) Date de publication et mention de la délivrance du brevet: **16.05.2012**
(21) Numéro de dépôt: 07004323.7
(22) Date de dépôt: 02.03.2007
(51) Int. Cl.: G05B 19/042

(54) **Procédé de commande et de test d'une installation domotique filaire**
Verfahren zur Bedienung und zum Testen einer verdrahteten Heiminstallation
Method of controlling and testing a wired home automation installation

(30) Priorité: 06.03.2006 FR 0601961
(43) Date de publication de la demande: 10.10.2007
(73) Titulaire: Somfy SAS, 74300 Cluses (FR)
(72) Inventeur: Dumont D'Ayot, Geoffroy, 74600 Seynod (FR)
(74) Mandataire: Bugnion Genève

(56) Documents cités:
- EP-A1- 1 154 120
- EP-A2- 0 822 315
- EP-A2- 1 586 964
- WO-A2-2005/104330
- US-A1- 2004 008 058

## Description

L'invention concerne un procédé de commande selon le préambule de la revendication 1. L'invention concerne également un actionneur pour mettre en oeuvre un tel procédé.

Il est connu de commander un équipement domotique mobile, en l'alimentant par le réseau commercial alternatif via un point de commande. Ce point de commande permet de lui donner un ordre de commande de mouvement dans un premier ou un deuxième sens selon qu'un interrupteur inverseur contenu dans le point de commande établit un raccordement d'un conducteur de phase du réseau avec un premier ou un deuxième conducteur de phase dans un actionneur de l'équipement.

La situation dans laquelle un contact est établi simultanément entre le conducteur de phase du réseau et deux conducteurs de phase de l'actionneur est interprétée comme un ordre de passage dans un mode de programmation. Dans ce cas, l'actionneur efface des valeurs de fonctionnement (telles que par exemple les valeurs d'arrêt d'alimentation en fin de course ou la valeur faisant correspondre les ordres de commande de mouvements aux mouvements) qui avaient été préalablement enregistrées dans une éventuelle procédure de réglage antérieure. L'actionneur se tient ensuite prêt à enregistrer de nouvelles valeurs de fonctionnement.

On connaît par exemple de la demande EP 1 154 120 une procédure de remise à zéro d'un actionneur dans laquelle on court-circuite, à cinq reprises, deux bornes pendant une durée inférieure à 0.5 seconde. Cette ergonomie compliquée est conçue pour éviter qu'une remise à zéro de l'actionneur puisse être déclenchée de manière non intentionnelle par une simple mauvaise manipulation d'un utilisateur.

Dans les cas où le point de commande n'est pas étanche, un problème se pose. En effet, l'humidité peut provoquer au niveau du point de commande une liaison électrique faiblement impédante entre les deux conducteurs de phase de l'actionneur. Dans ce cas, comme un dispositif électronique de détection est situé dans l'actionneur pour détecter la présence éventuelle de tension sur l'un ou l'autre des conducteurs de phase de l'actionneur à l'aide de circuits fortement impédants, une tension peut être détectée simultanément sur les deux phases quand le point de commande n'établit le contact qu'avec une seule d'entre elles. Le résultat est un passage non désiré en mode de programmation, et éventuellement la perte involontaire des valeurs de fonctionnement précédemment enregistrées ce qui peut présenter des conséquences désastreuses pour l'équipement domotique.

Le même problème se pose lorsque la liaison filaire entre ce point de commande et l'actionneur est interrompue par un connecteur non étanche ou simplement mal fermé. Par la suite, on entend par « point de commande » à la fois le commutateur électrique permettant l'établissement de contacts et la liaison filaire entre ce commutateur et l'actionneur.

Le but de l'invention est de fournir un procédé de commande d'actionneur remédiant à cet inconvénient et améliorant les procédés de commande connus de l'art antérieur. En particulier, le procédé de commande permet d'éviter la perte de valeurs de fonctionnement lorsqu'un court-circuit accidentel lié à l'humidité se produit dans un point de commande. Le procédé permet également de détecter et/ou de remédier et/ou de signaler un dysfonctionnement dû à de l'humidité dans un point de commande alimentant un actionneur. L'invention concerne également un actionneur pour la mise en oeuvre d'un tel procédé.

Le procédé de commande selon l'invention est caractérisé en ce qu'au cas où la présence d'une tension est détectée sur deux bornes de phase, le procédé exécute une procédure de test pour déterminer si cette présence est due à un dysfonctionnement, en particulier, due à l'existence d'une impédance parasite entre les bornes de phase.

Différents modes d'exécution du procédé de commande selon l'invention sont définis par les revendications dépendantes 2 à 8.

L'actionneur selon l'invention est défini par la revendication 9.

Le dessin annexé représente, à titre d'exemple, un mode de réalisation d'un actionneur selon l'invention et un mode d'exécution d'un procédé de commande selon l'invention.

La figure 1 est un schéma électrique d'un mode de réalisation d'un actionneur selon l'invention.

La figure 2 est un ordinogramme d'un mode d'exécution d'un procédé de commande selon l'invention.

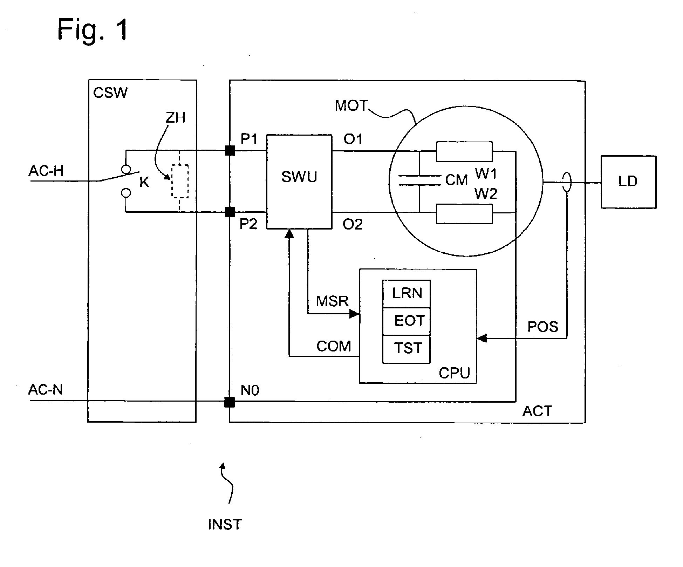

Une installation INST, représentée à la figure 1, comprend un point de commande CSW et un actionneur ACT, le point de commande permettant l'alimentation électrique de l'actionneur à partir de réseau commercial de distribution électrique AC-H, AC-N.

L'actionneur ACT permet l'entraînement d'une charge LD, dans deux sens de mouvement, à l'aide d'un moteur MOT par le biais d'un arbre de sortie et d'éventuels réducteur et dispositif mécanique de conversion de mouvement non représentés. La charge peut être tout élément domotique mobile tel que notamment, un volet roulant, une porte de garage basculante, un portail à mouvement linéaire, un portail à mouvement rotatif, un store vénitien, une fenêtre pivotante, un store enroulable extérieur.

Le point de commande CSW est relié en entrée à deux conducteurs : le conducteur de phase AC-H du réseau et le conducteur de neutre AC-N du réseau et en sortie à trois bornes électriques de l'actionneur ACT : une première borne de phase P1, une deuxième borne de phase P2 et une borne de neutre N0. Le point de commande CSW comprend un interrupteur inverseur K à trois positions dont le contact mobile est relié au conducteur de phase du réseau. Dans une première position, le contact mobile est relié à la première borne de phase de l'actionneur, dans une deuxième position, le contact mobile est relié à la deuxième borne de phase de l'actionneur et, dans une troisième position, le contact mobile est maintenu en l'air. La connexion entre le conducteur de neutre du réseau électrique et la borne de neutre N0 de l'actionneur est permanente.

Alternativement, le conducteur de neutre AC-N est directement raccordé à la borne de neutre N0, sans passer par le point de commande CSW.

Pendant une phase d'installation de l'équipement, l'interrupteur inverseur est remplacé par un interrupteur permettant d'établir simultanément un contact entre le conducteur de phase du réseau et les deux bornes de phase de l'actionneur ou un shunt est mis en place entre les deux bornes de phase de l'actionneur avant que l'interrupteur inverseur soit actionné pour appliquer la tension du réseau sur l'une des bornes de phase de l'actionneur. L'application simultanée d'une tension sur les deux bornes de phase de l'actionneur permet en effet de faire passer celui-ci dans un mode d'apprentissage dans lequel diverses valeurs de fonctionnement (notamment les valeurs de fins de course) peuvent être stockées.

L'actionneur ACT comprend une unité de commande CPU, constituée par un microcontrôleur. Cette unité de commande analyse les tensions présentes entre les bornes de phase P1, P2 de l'actionneur et la borne de neutre N0 pour déterminer les ordres de commande émanant du point de commande CSW. L'application d'une tension sur la première borne de phase P1 est interprétée par l'unité de commande comme un ordre de manoeuvre de la charge LD dans un premier sens et l'application d'une tension sur la deuxième borne de phase P2 est interprétée par l'unité de commande comme un ordre de manoeuvre de la charge LD dans un deuxième sens.

Quand un ordre de manoeuvre est détecté, l'unité de contrôle fait établir des connexions électriques appropriées entre la borne de phase alimentée P1 ou P2 et le moteur MOT via une unité de connexion SWU. L'unité de connexion est apte à établir une connexion électrique entre la première borne de phase P1 et une première sortie O1 ou entre la deuxième borne de phase P2 et une deuxième sortie O2. Elle est également apte à établir une connexion électrique entre la première borne de phase P1 et la deuxième sortie O2 ou entre la deuxième borne de phase P2 et la première sortie O1. L'une ou l'autre de ces connexions est établie selon l'état de signaux de commande présents sur un bus de commande COM raccordant des sorties logiques de l'unité de commande CPU à l'unité de connexion SWU. Les connexions sont établies par des relais électromécaniques ou des dispositifs à semi-conducteurs.

Le moteur MOT est de type monophasé à induction et à condensateur permanent. Il comprend un premier enroulement W1, un second enroulement W2, et un condensateur de déphasage CM raccordé à une première extrémité de chacun des enroulements. Chaque connexion entre le condensateur et un enroulement est elle-même raccordée à l'une des sorties O1, O2 de l'unité de connexion. Les deuxièmes extrémités des enroulements sont raccordées entre elles et à la borne de neutre N0 de l'actionneur.

Quand une tension alternative est appliquée entre la première sortie O1 et la borne de neutre N0, alors le moteur tourne dans un premier sens. Quand une tension alternative est appliquée entre la deuxième sortie O2 et la borne de neutre N0, alors le moteur tourne dans un deuxième sens.

L'unité de connexion étant raccordée aux deux bornes de phase P1, P2, elle permet d'accéder aux tensions présentes à ces bornes. Elle permet d'accéder également aux courants circulant éventuellement entre ces bornes et le moteur par l'intermédiaire de capteurs de courants. Ces différentes grandeurs électriques sont transmises vers l'unité de commande CPU par l'intermédiaire d'un bus de mesure MES raccordé à des entrées analogiques de l'unité de commande.

Alternativement, l'unité de connexion comprend elle-même des moyens de mesure ou de comparaison des grandeurs électriques. Dans ce cas, ce sont directement les résultats ou les états de ces moyens de mesure ou de comparaison qui sont transmis par le bus de mesure MES, raccordé à des entrées logiques de l'unité de commande.

L'unité de commande, et éventuellement l'unité de connexion sont également raccordées à la borne de neutre, qui sert de masse électrique et de référence de mesure des tensions. Pour ne pas surcharger la figure, cette liaison, de même que le circuit d'alimentation de ces deux unités, ne sont pas représentés.

Un capteur de rotation est prévu au niveau de l'arbre de sortie de l'actionneur et délivre une information de position POS à une entrée de l'unité de commande. Cette information de position est comparée à une ou plusieurs positions limites ou fin de course EOT enregistrées dans l'unité de commande afin de provoquer l'arrêt de l'alimentation du moteur quand une telle position est atteinte.

L'enregistrement des valeurs particulières des positions de fin de course EOT est rendu possible par l'activation d'un mode d'apprentissage à l'aide d'une procédure d'apprentissage LRN. Cette procédure LRN est normalement activée lors de la détection simultanée d'une tension sur la première et la deuxième borne de phase de l'actionneur. Une telle procédure est par exemple décrite dans la demande de brevet EP 1 586 964.

La présence d'une impédance parasite due à de l'humidité dans le point de commande est représentée en pointillé sur la figure 1 par un élément ZH au moins résistif. Sur la figure 1, l'interrupteur inverseur K utilisé dans le point de commande CSW est dans une position de commande d'un ordre de mouvement, la tension étant appliquée sur la première borne de phase P1. Du fait de l'impédance de l'élément parasite ZH, une tension apparaît également entre la deuxième borne de phase P2 et la borne de neutre. Le procédé de commande selon l'invention permet d'éviter que cette tension apparaissant sur les deux bornes de phase soit interprétée comme un ordre de passage dans un mode d'apprentissage.

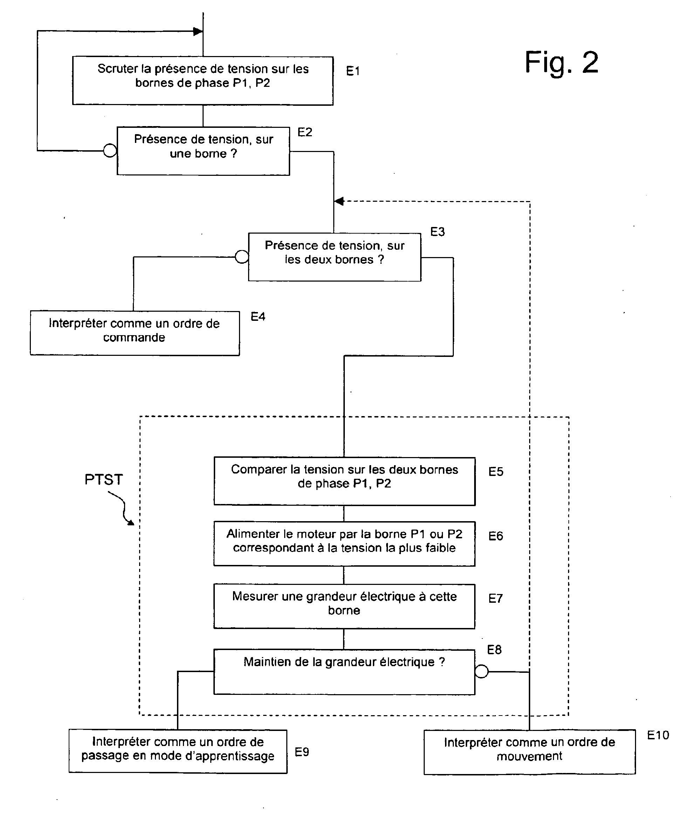

A cet effet, une procédure PTST de test de commande est mis en oeuvre par un programme TST implanté dans l'unité de commande. Un premier mode d'exécution d'un procédé de commande d'actionneur comprenant cette procédure de test de commande est décrit ci-après en référence à la figure 2.

Dans une étape E1, l'actionneur scrute la présence d'une tension sur l'une ou l'autre de ses bornes de phase P1, P2.

Dans une étape de test E2, lorsqu'une tension sur l'une des bornes de phase est détectée, on passe à une étape de test E3, sinon on boucle sur l'étape E1.

Dans l'étape de test E3, on teste si la tension est appliquée sur les deux bornes de phase. Si tel est le cas, on passe à une procédure de test de commande PTST. Sinon, on passe à une étape E4 dans laquelle l'actionneur interprète et exécute l'ordre correspondant à l'application de la tension sur la borne de phase.

La procédure de test de commande PTST débute à l'étape E5. Dans cette étape E5, on compare la tension sur les deux bornes de phase P1 et P2, afin de déterminer quelle est la plus faible. Dans le cas représenté sur la figure 1, la tension sur la borne P2 est nécessairement plus faible que sur la borne P1, car l'impédance parasite ZH ne peut être assimilée à un court circuit franc.

Dans une étape E6, on alimente le moteur par la borne sur laquelle se trouve la tension la plus faible. Dans le cas de la figure 1, l'unité de commande qui détecte la tension la plus faible sur la deuxième borne de phase P2 donne un ordre d'établissement d'une connexion entre la deuxième borne de phase P2 et la deuxième sortie O2. Alternativement, l'ordre d'établissement d'une connexion concerne la deuxième borne de phase P2 et la première sortie O1.

Le moteur est donc alimenté à travers l'élément parasite ZH, ce qui induit des conséquences très variables selon le type d'humidité. Il n'y a pas réellement de mouvement du moteur. Par contre, la circulation même très brève du courant suffit à supprimer l'humidité si celle-ci est purement superficielle. Dans tous les cas, le passage du courant dans l'élément parasite ZH provoque une chute de tension au niveau de la borne P2. Que l'on mesure le courant ou la tension au niveau de la deuxième borne de phase, on constate que la grandeur électrique n'est pas maintenue constante, ce qui suffit à montrer que l'élément parasite n'est pas un contact franc entre les deux bornes de phase P1 et P2.

Dans une étape E7, on mesure pendant l'étape d'alimentation E6, une des grandeurs électriques précédemment évoquées (par exemple la tension ou l'intensité), pendant un intervalle de temps de par exemple 300 millisecondes, soit de manière continue, soit par échantillonnage, soit en effectuant simplement une mesure en début et fin d'intervalle de temps.

Dans une variante de réalisation des étapes E6 et E7, on peut commencer par alimenter le moteur par la borne présentant la plus grande tension. En effet, lorsque les tensions sur les deux bornes sont très semblables, il est important d'alimenter le moteur par les deux bornes, l'une après l'autre et de mesurer ensuite les évolutions des potentiels au niveau de ces bornes pour déterminer si l'une des bornes est reliée à la phase par une impédance parasite. Du fait des incertitudes de mesures, le potentiel mesuré de la borne de phase reliée à la phase par l'impédance parasite peut être initialement supérieur au potentiel mesuré de la borne de phase reliée directement à la phase.

Dans une étape de test E8, on évalue si la grandeur mesurée s'est maintenue sur l'intervalle ou si elle a subi une diminution significative. Si la grandeur s'est maintenue, c'est qu'il existe un contact franc entre le conducteur de phase du secteur et les deux bornes de phase de l'actionneur : le procédé passe alors à une étape E9, dans laquelle la présence simultanée des deux tensions sur les bornes de phase est interprétée comme un ordre de passage en mode d'apprentissage.

Les deux sorties de l'étape E8 constituent la fin de la procédure de test de commande PTST.

La caractéristique de grandeur électrique mesurée est par exemple l'amplitude crête à crête de la tension. Dans certains cas de dépôt humide, cette amplitude diminue fortement sur une ou plusieurs périodes, puis réapparaît. En tout cas, elle varie de manière significative au cours de l'étape de test. Si la grandeur électrique a varié pendant l'étape de test E8, c'est que la présence simultanée de tension sur les deux bornes de phase de l'actionneur résulte de la présence d'humidité. Dans ce cas, le procédé passe à une étape E10, dans laquelle il n'est plus tenu compte de la présence de tension sur la borne qui présentait initialement une tension plus faible. Ainsi, dans le cas de la figure 1, on considère que seule est alimentée la première borne de phase P1, ce qui est interprété comme un ordre de commande de mouvement.

L'étape E 10 peut être remplacée par un retour vers l'étape E3, comme représenté par une flèche en trait pointillé. Dans ce cas, si l'action de l'utilisateur sur le point de commande est maintenue, le procédé est répété tant que le passage du courant n'a pas suffisamment éliminé le dysfonctionnement du point de commande dû à l'humidité et, par conséquent, tant qu'il apparaît une tension parasite sur la borne de phase non reliée au conducteur de phase par un contact franc. Quand les conséquences du dysfonctionnement ont suffisamment disparu, la procédure comprenant les étapes E3 à E8 n'est plus mise en oeuvre puisqu'on remplit les conditions de l'étape E3 et l'ordre de commande est reçu sans ambiguïté par l'actionneur.

L'étape E10 peut également donner naissance à plusieurs variantes d'exécution de l'ordre de mouvement, ce en quoi elle peut différer de l'étape E4.

Dans une première variante, on n'exécute pas l'ordre de mouvement. Dans ce cas, l'utilisateur est obligé d'actionner une nouvelle fois l'interrupteur inverseur du point de commande pour commander un mouvement. En général, le dysfonctionnement disparaît du fait d'un phénomène d'échauffement, d'électrolyse ou autre provoqué par le passage du courant lors de l'exécution de la procédure de test de commande. Ainsi, cette procédure n'est pas de nouveau exécutée lors du nouvel actionnement du point de commande. Le fait que l'ordre n'ait pas été exécuté lors du premier actionnement du point de commande avertit l'utilisateur d'un problème dans l'installation.

Dans une deuxième variante, l'ordre de commande de mouvement correspondant au premier actionnement du point de commande est exécuté après un bref mouvement d'aller et retour de la charge, de manière à avertir à nouveau l'utilisateur d'un problème.

Dans une troisième variante, l'ordre de commande de mouvement correspondant au premier actionnement du point de commande est exécuté et l'incident est enregistré dans une mémoire de l'unité de commande. Les première et deuxième variantes ne sont alors utilisées que si l'incident se reproduit. Dans ce cas, pour exécuter l'ordre de mouvement, l'unité de commande donne à l'unité de connexion l'ordre d'établir la connexion de la première sortie O1 ou de la deuxième sortie O2 avec la borne de phase qui présentait initialement la plus forte tension, c'est-à-dire la première borne P1 dans le cas de la figure 1.

Dans un deuxième mode d'exécution de cette procédure, l'étape de test E8 peut consister en une comparaison de la grandeur électrique à une valeur pré-enregistrée. Par exemple, si la grandeur mesurée à l'étape E7 est l'intensité du courant passant au niveau de la borne de phase raccordée au moteur, le test peut consister à s'assurer que le courant est supérieur à un seuil donné. Le seuil de courant donné est choisi de manière à ce que, quel que soit le sens de mouvement de la charge, le courant du moteur est en fonctionnement normal toujours supérieur à ce seuil. Si le résultat du test est positif, c'est que le moteur n'est pas alimenté à travers un élément parasite ZH. L'enregistrement d'une valeur seuil de courant donné peut être réalisée suite à une étape de mesure du courant alimentant le moteur au cours d'un cycle d'apprentissage.

Quand on arrive à l'étape E9 du procédé, le moteur a été correctement alimenté pendant une durée courte. Ce début de mouvement, alors que l'ordre était un ordre d'entrée en mode apprentissage, n'est pas pénalisant : au contraire, il intervient comme un signal de retour visuel et sonore vers l'installateur pour lui signaler l'entrée en mode d'apprentissage.

Dans une variante d'exécution de la procédure de test, l'étape E5 peut comprendre une étape de détermination de la différence ou du rapport existant entre la tension la plus élevée et la moins élevée appliquées aux deux bornes de phase.

Si cette différence ou ce rapport est supérieur à un seuil donné (par exemple 10 Volts de différence pour une tension du réseau de 230 Volts ou un rapport supérieur à 1,05), l'actionneur ne tient pas compte de la tension la moins élevée appliquée aux bornes de phase. On passe alors immédiatement à l'étape E10 précédemment décrite.

Par contre si les valeurs des tensions appliquées aux deux bornes de phase sont plus semblables, on passe à l'étape E6 précédemment décrite.

Le procédé de commande peut également être appliqué à la commande d'un actionneur dans lequel il n'est pas prévu que la présence simultanée de tension sur deux bornes de phase de l'actionneur soit interprétée comme un ordre d'entrée dans un mode d'apprentissage ou plus largement soit interprété comme un ordre quel qu'il soit. Dans ce cas, l'intérêt du procédé de commande est de permettre de détecter et/ou de remédier et/ou de signaler un dysfonctionnement dû à de l'humidité dans un point de commande alimentant un actionneur.

Quand la comparaison entre les tensions aux bornes de phase P1 et P2 n'est pas directe mais est réalisée à partir de tensions images obtenues à l'aide de ponts diviseurs résistifs, se pose éventuellement un problème de dispersion de valeurs des composants utilisés. Du fait de cette dispersion, les valeurs images peuvent être faussées et donner lieu à une comparaison erronée. Pour ne pas recourir à des composants trop précis, et donc coûteux, une procédure de calibrage de l'actionneur en production permet d'appliquer une même tension aux deux bornes et d'enregistrer un éventuel décalage qui, mémorisé, sera utilisé comme correction dans les mesures ultérieures.

Alternativement, une variante de la procédure de test consiste à alimenter séquentiellement le moteur à partir des deux bornes de tension. On mesure des grandeurs électriques au niveau de ces deux bornes pendant les deux alimentations et, à l'issue de ces phases, l'actionneur sait de manière certaine, si la présence de tension sur les deux bornes de phase doit être interprétée comme un ordre de commande de mouvement ou comme un ordre de passage en mode d'apprentissage. Dans cette variante, il existe donc toujours au moins une étape E6 dans laquelle le moteur a été alimenté par la borne correspondant à la tension la plus faible.

Enfin, il est rappelé que l'expression « point de commande » désigne à la fois le commutateur électrique permettant l'établissement de contacts et la liaison filaire entre ce commutateur et l'actionneur, cette liaison filaire pouvant elle-même comporter des moyens de connexion sujets à humidité.

Dans le procédé précédemment décrit, la connexion du conducteur de phase à la première borne de phase est interprétée, par l'actionneur, comme un ordre de commande de mouvement du moteur dans un premier sens, la connexion du conducteur de phase à la deuxième borne de phase est interprétée, par l'actionneur, comme un ordre de commande de mouvement du moteur dans un deuxième sens et la connexion simultanée du conducteur de phase à la première borne de phase et à la deuxième borne de phase est interprétée, par l'actionneur, comme un ordre de basculement de l'actionneur dans un mode d'apprentissage. Il est cependant clair que chacune de ces configurations de connexion du conducteur de phase aux bornes de phase pourrait être interprétée par l'actionneur comme un tout autre type d'ordre.

Comme vu précédemment, le dysfonctionnement est en particulier la présence d'une impédance parasite entre les bornes de phase du fait de la présence d'humidité. Cette impédance parasite est par exemple localisée dans un connecteur disposé entre le point de commande de l'actionneur et les bornes de phase de l'actionneur.

## Revendications

1. Procédé de commande d'un actionneur (ACT) pour l'entraînement d'un équipement domotique mobile (LD), comprenant un moteur (MOT) et des première (P1) et deuxième (P2) bornes de phase susceptibles d'être reliées à un conducteur de phase (AC-H) d'une source (AC-H, AC-N) d'alimentation électrique par l'intermédiaire d'un point de commande (CSW), dans lequel la connexion du conducteur de phase à la première borne de phase est interprétée, par l'actionneur, comme un ordre de commande de mouvement du moteur dans un premier sens et dans lequel la connexion du conducteur de phase à la deuxième borne de phase est interprétée, par l'actionneur, comme un ordre de commande de mouvement du moteur dans un deuxième sens, **caractérisé en ce qu'**au cas où la présence d'une tension est détectée sur les deux bornes de phase, le procédé exécute, pendant que cette présence est détectée, une procédure de test (PTST) pour déterminer si cette présence est due à l'existence d'une impédance parasite entre les première et deuxième bornes de phase.

2. Procédé de commande selon la revendication 1, **caractérisé en ce que** la procédure de test comprend une étape d'alimentation du moteur par le biais de la borne de phase présentant initialement la plus faible tension.

3. Procédé de commande selon la revendication 2, **caractérisé en ce que** la procédure de test comprend, pendant l'étape d'alimentation du moteur par le biais de la borne de phase présentant initialement la plus faible tension, une étape de mesure d'une grandeur électrique au niveau de cette borne de phase.

4. Procédé de commande selon la revendication 3, **caractérisé en ce que**, selon l'évolution de la grandeur électrique pendant l'étape de mesure, le procédé de commande conclut ou non à un dysfonctionnement du point de commande.

5. Procédé de commande selon la revendication 4, **caractérisé en ce que**, lorsque le procédé de commande conclut à un dysfonctionnement du point de commande, l'actionneur n'interprète pas la présence de tension sur ses deux bornes de phase comme une connexion simultanée du conducteur de phase à la première borne de phase et à la deuxième borne de phase.

6. Procédé de commande selon l'une des revendications précédentes, **caractérisé en ce que** la connexion simultanée du conducteur de phase à la première borne de phase et à la deuxième borne de phase est interprétée, par l'actionneur, comme un ordre de basculement de l'actionneur dans un mode d'apprentissage.

7. Procédé de commande selon l'une des revendications précédentes, **caractérisé en ce que** l'impédance parasite entre les bornes de phase est due à la présence d'humidité.

8. Procédé de commande selon la revendication précédente, **caractérisé en ce que** l'impédance parasite est localisée dans un connecteur disposé entre le point de commande de l'actionneur et les bornes de phase de l'actionneur.

9. Actionneur (ACT) muni d'un moteur (MOT) et de première (P1) et deuxième (P2) bornes de phase susceptibles d'être reliées à un conducteur (AC-H) de phase d'une source (AC-H, AC-N) d'alimentation électrique par l'intermédiaire d'un point de commande (CSW), **caractérisée en ce qu'**il comprend des moyens matériels (CPU, SWU) et logiciels (TST) pour la mise en oeuvre du procédé de commande selon l'un des revendications 1 à 8.

## Claims

1. Method for controlling an actuator (ACT) for driving a mobile home automation equipment item (LD), comprising a motor (MOT) and first (P1) and second (P2) phase terminals that can be linked to a phase conductor (AC-H) of a source (AC-H, AC-N) of electrical power supply via a control point (CSW), in which the connection of the phase conductor to the first phase terminal is interpreted, by the actuator, as a command to control movement of the motor in a first direction and in which the connection of the phase conductor to the second phase terminal is interpreted, by the actuator, as a command to control movement of the motor in a second direction, **characterized in that**, in the case where the presence of a voltage is detected on both phase terminals, the method executes, while this presence is detected, a test procedure (PTST) to determine whether this presence is due to the existence of a spurious impedance between the first and second phase terminals.

2. Control method according to Claim 1, **characterized in that** the test procedure comprises a step for supplying power to the motor via the phase terminal initially exhibiting the lowest voltage.

3. Control method according to Claim 2, **characterized in that** the test procedure comprises, during the step for supplying power to the motor via the phase terminal initially exhibiting the lowest voltage, a step for measuring an electrical quantity on this phase terminal.

4. Control method according to Claim 3, **characterized in that**, depending on the trend of the electrical quantity during the measurement step, the control method concludes or does not conclude that there is a malfunction of the control point.

5. Control method according to Claim 4, **characterized in that**, when the control method concludes that there is a malfunction of the control point, the actuator does not interpret the presence of voltage on its two phase terminals as a simultaneous connection of the phase conductor to the first phase terminal and to the second phase terminal.

6. Control method according to one of the preceding claims, **characterized in that** the simultaneous connection of the phase conductor to the first phase terminal and to the second phase terminal is interpreted, by the actuator, as a command to switch over the actuator to a learning mode.

7. Control method according to one of the preceding claims, **characterized in that** the spurious impedance between the phase terminals is due to the presence of humidity.

8. Control method according to the preceding claim, **characterized in that** the spurious impedance is located in a connector positioned between the control point of the actuator and the phase terminals of the actuator.

9. Actuator (ACT) provided with a motor (MOT) and first (P1) and second (P2) phase terminals that can be connected to a phase conductor (AC-H) of a source (AC-H, AC-N) of electrical power supply via a control point (CSW), **characterized in that** it comprises hardware (CPU, SWU) and software (TST) means for implementing the control method according to one of Claims 1 to 8.

## Patentansprüche

1. Verfahren zur Steuerung einer Antriebsvorrichtung (ACT) für den Antrieb einer beweglichen haustechnischen Einrichtung (LD) mit einem Motor (MOT) und ersten (P1) und zweiten Phasenanschlüssen (P2), welche mit einem Phasenleiter (AC-H) einer Energiequelle (AC-H, AC-N) zur elektrischen Speisung über einen Steuerpunkt (CSW) verbindbar sind, in welchem die Verbindung des Phasenleiters mit dem ersten Phasenanschluss von der Antriebsvorrichtung als Steuerbefehl zum Anlaufen des Motors in einer ersten Drehrichtung interpretiert wird und in welchem die Verbindung des Phasenleiters mit dem zweiten Phasenanschluss von der Antriebsvorrichtung als Steuerbefehl zum Anlaufen des Motors in seiner zweiten Drehrichtung interpretiert wird, **dadurch gekennzeichnet, dass** das Verfahren beim Ermitteln des Anliegens einer Spannung auf den beiden Phasenanschlüssen einen Testablauf (PTST) ausführt, solange dieses Anliegen der Spannung ermittelt wird, um zu prüfen, ob dieses Anliegen auf die Anwesenheit einer Störintensität zwischen dem ersten und dem zweiten Phasenanschluss zurückzuführen ist.

2. Steuerungsverfahren nach Anspruch 1, **dadurch gekennzeichnet, dass** der Testablauf einen Schritt zur Speisung des Motors über den Phasenanschluss aufweist, an dem zunächst die niedrigere Spannung anliegt.

3. Steuerungsverfahren nach Anspruch 2, **dadurch gekennzeichnet, dass** der Testablauf während des Schrittes zur Speisung des Motors über den Phasenanschluss, an dem zunächst die niedrigste Spannung anliegt, ein Schritt zur Messung einer elektrischen Grösse an diesem Phasenanschluss aufweist.

4. Steuerungsverfahren nach Anspruch 3, **dadurch gekennzeichnet, dass** das Steuerverfahren je nach der Entwicklung der elektrischen Grösse im Verlaufe des Schrittes zur Messung entscheidet, ob eine Fehlfunktion des Steuerpunktes vorliegt oder nicht.

5. Steuerungsverfahren nach Anspruch 4, **dadurch gekennzeichnet, dass** die Antriebsvorrichtung bei der Feststellung einer Störfunktion des Steuerpunktes durch das Steuerverfahren das Anliegen einer Spannung auf seinen beiden Phasenanschlüssen als eine gleichzeitige Verbindung des Phasenleiters mit dem ersten Phasenanschluss und dem zweiten Phasenanschluss interpretiert.

6. Steuerverfahren nach einem der vorstehenden Ansprüche, **dadurch gekennzeichnet, dass** eine gleichzeitige Verbindung des Phasenleiters mit dem ersten Phasenanschluss und dem zweiten Phasenanschluss von der Antriebsvorrichtung als Befehl zur Umschaltung der Antriebsvorrichtung in einen Lernmodus interpretiert wird.

7. Steuerverfahren nach einem der vorstehenden Ansprüche, **dadurch gekennzeichnet, dass** die Störimpedanz zwischen den Phasenanschlüssen auf der Anwesenheit von Feuchtigkeit beruht.

8. Steuerverfahren nach vorstehendem Anspruch, **dadurch gekennzeichnet, dass** die Störimpedanz in einem Leiter ermittelt wird, welcher sich zwischen dem Steuerpunkt der Antriebsvorrichtung und den Phasenanschlüssen der Antriebsvorrichtung befindet.

9. Antriebsvorrichtung (ACT), mit einem Motor (MOT) und einem ersten Phasenanschluss (P1) sowie einem zweiten Phasenanschluss (P2), welche mit einem Phasenleiter (AC-H) einer Quelle (AC-H, AC-N) einer elektrischen Speisung über einen Steuerpunkt (CSW) verbindbar sind, **dadurch gekennzeichnet, dass** sie Hardware (CPU, SWU) sowie Software (TST) zur Ausführung des Steuerverfahrens nach einem der Ansprüche 1 bis 8 aufweist.
